# FASCICULE DE BREVET EUROPEEN

(11) **EP 4 584 515 B1**
(45) Date de publication et mention de la délivrance du brevet: **12.08.2026**
(21) Numéro de dépôt: 23768287.7
(22) Date de dépôt: 08.09.2023
(51) Int. Cl.: F16H 3/083, B62M 6/55, B62M 11/06, B62M 25/08, F16D 11/12, F16D 23/12, F16H 25/20, F16H 63/30

(54) **DISPOSITIF DE CHANGEMENT DE VITESSE POUR ENGIN DE MOBILITÉ**
GANGSCHALTVORRICHTUNG FÜR EIN MOBILITÄTSFAHRZEUG
GEAR-SHIFTING DEVICE FOR MOBILITY VEHICLE

(30) Priorité: 09.09.2022 FR 2209082; 09.09.2022 FR 2209083
(43) Date de publication de la demande: 16.07.2025
(73) Titulaire: VALEO EMBRAYAGES, 80009 Amiens (FR)
(72) Inventeur: BOULET, Jerome, 38070 St Quentin Fallavier (FR); PASTOR, Emmanuel, 38070 St Quentin Fallavier (FR)
(74) Mandataire: Valeo Powertrain Systems
(86) Numéro de dépôt international: PCT/EP2023/074732
(87) Numéro de publication internationale: WO 2024/052530

(56) Documents cités:
- DE-B3- 102017 008 376
- FR-A5- 2 063 214
- US-A- 5 992 254
- US-B2- 6 698 303

## Description

La présente invention concerne le domaine des dispositifs de changement de vitesses, et plus particulièrement un dispositif de changement de vitesse pour un engin de mobilité utilisant au moins une propulsion électrique, et par exemple un vélo à assistance électrique.

Lors du fonctionnement d'un engin de mobilité, une force motrice est transmise aux roues par l'intermédiaire d'un système de manivelle tournant autour d'un axe de pédalier qui entraîne la roue arrière généralement par une chaîne.

Il est déjà connu dans l'art antérieur des boites de vitesses pour engin de mobilité Par exemple, le brevet FR2913661 divulgue un dispositif de changement de vitesses pour vélos comportant une boîte de vitesses à engrenages et une navette coulissante pour effectuer la sélection du rapport de vitesse. Le document DE102017007683 divulgue aussi un dispositif de changement de vitesse.

La navette agit sur un système à cliquets qui vont à leur tour agir sur des pignons d'entrée pour enclencher la vitesse choisie. L'inconvénient de ce système de l'art antérieur provient du fait que le guidage de la navette est imparfait.

La présente invention a donc pour objet de pallier un ou plusieurs des inconvénients des dispositifs de l'art antérieur en proposant un dispositif de changement de vitesse amélioré. Pour cela la présente invention propose un dispositif de changement de vitesse pour engin de mobilité comportant un arbre de sélection dans lequel sont disposées une navette, une vis sans fin et un tube de guidage dans lequel est positionnée la vis sans fin.

Selon un mode de réalisation de l'invention, une des extrémités du tube est inséré dans un élément de blocage en rotation permettant de bloquer la rotation du tube de guidage.

Selon un mode de réalisation de l'invention, le tube de guidage est formé par deux lames disposée longitudinalement par rapport à la vis sans fin et de part et d'autre.

Selon un mode de réalisation de l'invention, les deux lames sont disposées entre 45 degrés et 180 degrés par rapport à la vis sans fin dans la sens de sa longueur.

Selon un mode de réalisation de l'invention, la longueur du tube de guidage est déterminée de façon à ce que la vis sans fin y soit totalement inséré.

Selon un mode de réalisation de l'invention, la longueur du tube de guidage est identique à celle de la vis sans fin.

Selon l'invention, une première extrémité du tube de guidage a une forme de bague se terminant par un découpage en forme de créneau.

Selon l'invention, les créneaux coopèrent avec ceux d'au moins une rondelle anti-rotation fixée à l'arbre de sélection.

Selon un mode de réalisation de l'invention, la deuxième extrémité du tube de guidage est formée par une deuxième bague insérée dans une ouverture formée dans un élément de blocage en rotation.

Selon un mode de réalisation de l'invention, l'élément de blocage en rotation est formé par une rondelle.

Selon un mode de réalisation de l'invention, l'élément de blocage en rotation comporte en son centre une ouverture dans laquelle sont insérées les extrémités du tube de guidage et de la vis sans fin.

Selon un mode de réalisation de l'invention, l'élément de blocage en rotation est disposé radialement par rapport à la vis sans fin.

Selon un mode de réalisation de l'invention, l'élément de blocage en rotation à un diamètre supérieur à celui de l'arbre de sélection pour assurer la stabilité du blocage en rotation. Selon un mode de réalisation de l'invention, l'élément de blocage en rotation comporte au moins un découpage externe et/ou au moins un découpage interne.

Selon un mode de réalisation de l'invention, le découpage externe est formé au niveau du bord externe de l'élément de blocage en rotation de façon à former une languette décalée par rapport au plan radial de l'élément de blocage.

Selon un mode de réalisation de l'invention, le découpage interne est disposé entre le bord externe de l'élément de blocage en rotation et son ouverture centrale et est réalisé de façon à former une languette décalée par rapport au plan radial de l'élément de blocage en rotation.

Selon un mode de réalisation de l'invention, l'élément de blocage en rotation est inséré en pression et en force dans un logement adapté du couvercle du boitier de l'engin. L'invention concerne également un engin de mobilité, notamment engin de mobilité à assistance électrique, comportant un dispositif de changement de vitesse selon l'invention. D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'ensemble d'un engin de mobilité selon un des aspects de l'invention,
- la [Fig. 2] est une vue en élévation du boitier comportant l'ensemble de transmission de l'engin de mobilité de la Figure 1 2a) selon une première face, 2b) selon une deuxième face,
- la [Fig. 3] est une vue en coupe de l'ensemble de transmission selon l'invention,
- la [Fig. 4] est une vue en coupe d'un dispositif de changement de vitesse selon l'invention,
- la [Fig. 5] est une vue en coupe en élévation du dispositif de changement de vitesse selon l'invention,
- la [Fig. 6] est une vue en coupe de l'arbre de l'ensemble de transmission selon l'invention,
- la [Fig. 7] est une vue en élévation de la bague de maintien selon l'invention,
- la [Fig. 8] est une vue en élévation d'élément de blocage en rotation et du tube de guidage selon l'invention, 8a) avec la navette, 8b) sans la navette,
- la [Fig. 9] est une vue en coupe de l'intérieur du boitier comportant l'ensemble de transmission selon l'invention.

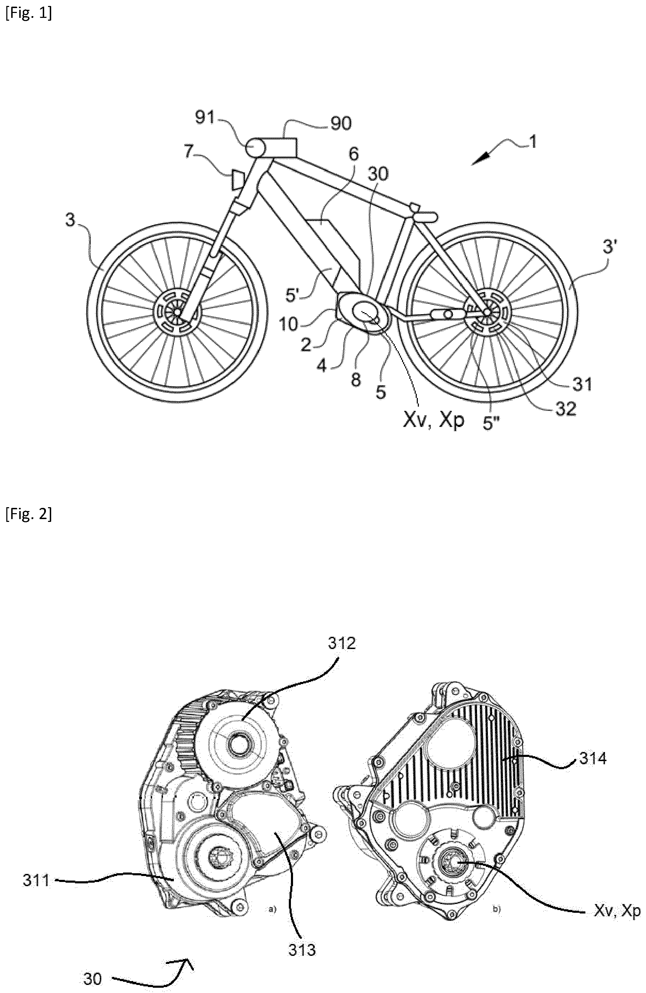

La [Fig. 1] illustre un engin de mobilité 1 selon un des aspects de l'invention. L'engin 1 est ici un vélo à assistance électrique comportant un moteur électrique 2. Le moteur électrique 2 est agencé pour assurer une partie de la propulsion de l'engin.

Le vélo comporte au moins deux roues 3, 3 'auxquelles est fournie une force motrice, par l'intermédiaire de deux pédales ou équivalent tournant autour d'un axe de pédalier d'axe Xp qui entraîne la roue arrière par exemple par une chaîne, ou tout autre moyen de transmission lors de son utilisation.

L'engin 1 comporte également une unité de pilotage 4 ainsi que plusieurs capteurs 5, 5', 5", situés par exemple au niveau du pédalier, sur le cadre du vélo ou au niveau d'une roue 3, 3'. L'engin 1 ici représenté comporte également un dispositif de stockage d'énergie sous forme d'une batterie 6, un système d'éclairage 7, un pédalier 8 d'axe Xp, un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

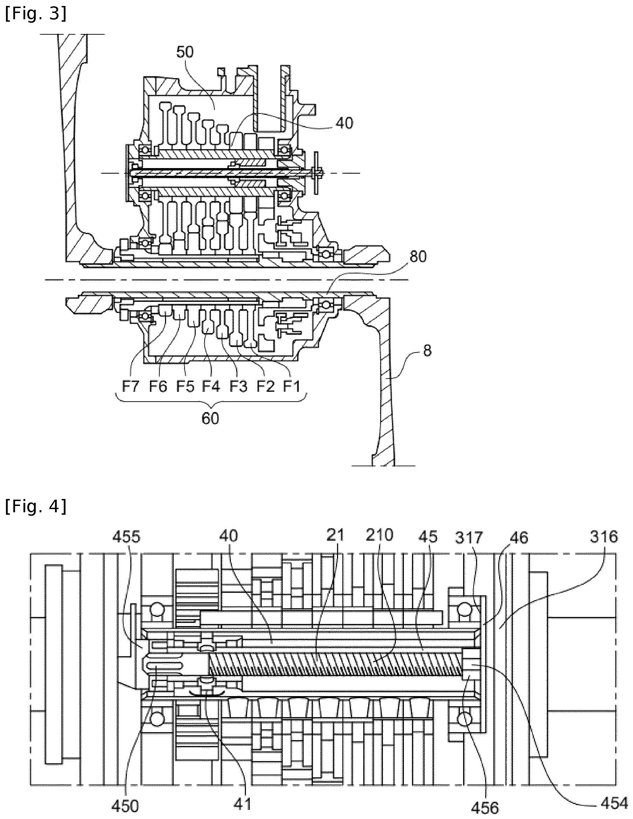

L'engin 1 comporte un ensemble de transmission 10 illustré [Fig. 3]. L'ensemble de transmission 10 comporte un dispositif de changement de vitesse 20 selon l'invention et le moteur électrique 2 pour fournir une partie de la puissance pour la propulsion de l'engin 1. Selon un mode de réalisation de l'invention, l'ensemble de transmission 10 est au moins en partie logé dans un boîtier 30 fermé par un couvercle 316 (illustré [Fig. 2]) ici positionné au niveau du pédalier 8 dont l'axe Xp est confondu avec l'axe de sortie Xᵥ du dispositif de changement de vitesse 20.

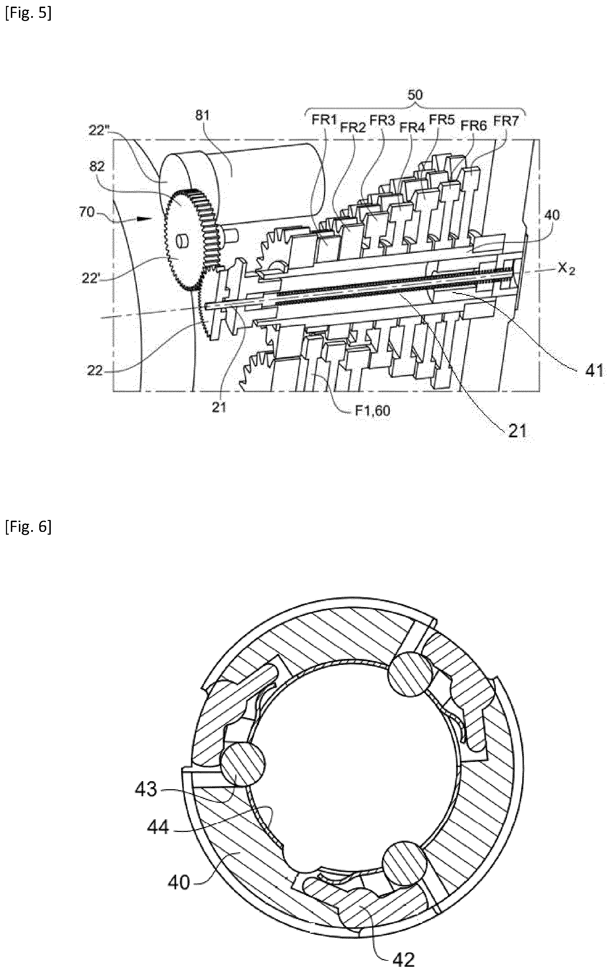

Selon un mode de réalisation de l'invention, le dispositif de changement de vitesse 20 illustré [Fig. 3] à [Fig. 5] comporte au moins 2 rapports, et par exemple 7 rapports entre un premier rapport dit rapport n°1 et un rapport supérieur dit rapport n°7.

Selon un mode de réalisation de l'invention, le dispositif de changement de vitesse 20 comporte une série de sept pignons de sortie 60 d'axe X, de référence F₁ à F₇, solidaires en rotation d'un arbre creux 80 et une série de sept pignons d'entrée 50, de référence Fr₁ à Fr₇ agencés pour tourner librement autour de l'arbre de sélection 40.

Selon un mode de réalisation de l'invention, l'arbre de sélection 40 illustré [Fig. 4] loge une navette 41 entourant une vis sans fin 21 du dispositif de changement de vitesse 20.

Selon une variante de l'invention, le dispositif de changement de vitesse 20 comporte un train épicycloïdal.

L'engin 1 selon l'invention, comporte un actionneur de changement de vitesse 70 agencé pour déplacer la navette 41 le long de la vis sans fin 21 par une liaison cinématique hélicoïdale, entre au moins 2 positions et par exemple entre 7 positions de P₁ à P₇ et engager un rapport sélectionné.

Selon un mode de réalisation de l'invention, l'arbre de sélection 40 est creux.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe Xm du moteur 81. Les dentures des pignon 22, 22', 22" peuvent être droites comme illustré ou hélicoïdales dans une variante non illustrée.

Selon un mode de réalisation de l'invention, le motoréducteur comporte des pignons d'axes parallèles comme illustré [Fig. 3] ou d'axes perpendiculaires.

Selon un mode de réalisation de l'invention, l'actionneur de changement de vitesse 70 comporte un engrenage conique, droit ou hélicoïdal et/ou avec un étage ou plus.

Selon une variante de réalisation de l'invention, l'actionneur de changement de vitesse 70 a une courroie ou une chaîne ou un cardan ou des pignons.

Le guidage en rotation de la vis sans fin 21 est par exemple assuré à l'aide de roulements à chacune de ses extrémités.

Selon un mode de réalisation de l'invention, la navette 41 est configurée pour, lors de son déplacement, se positionner sous le pignon du rapport sélectionné, et enclencher ce rapport.

Un exemple de configuration de la navette 41 est décrit dans la demande FR2975367.

Selon un mode de réalisation de l'invention, le dispositif de changement de vitesse 20 comporte au niveau de l'arbre de sélection 40 au moins deux cliquets 42 et par exemple pour un engin 1 à 7 vitesses, comporte sept cliquets 42.

Selon un mode de réalisation de l'invention, le dispositif de changement de vitesse 20 comporte une série de sept cliquets disposés les uns à la suite des autres selon l'axe longitudinale X2 de l'arbre de sélection 40.

Selon un mode de réalisation de l'invention, le dispositif de changement de vitesse 20 comporte au moins une série d'au moins sept cliquets disposés les uns à la suite des autres selon l'axe longitudinale X2 de l'arbre de sélection 40.

Selon un mode de réalisation de l'invention, le dispositif de changement de vitesse 20 comporte trois séries d'au moins sept cliquets disposés les uns à la suite des autres selon l'axe longitudinale X2 de l'arbre de sélection 40. Les séries étant disposées à 120 degrés l'une de l'autre autour de l'arbre de sélection 40.

Les cliquets 42 ont une forme configurée pour coopérer avec les pignons d'entrée Fri. Les cliquets 42 sont insérés dans des évidements 420 formés sur l'arbre de sélection 40 par une extrémités 422. Cette extrémité est totalement insérée dans le logement de façon à être plaquée contre la face supérieur 423 du logement 420. Chaque cliquet 42 est associé à un dispositif de soulèvement, et par exemple une bille 43, visible [Fig. 4] et [Fig. 6] disposée dans un perçage 430 de l'arbre de sélection 40, dépassant à l'intérieur de l'arbre40, placée sous chaque cliquet 42 de façon à pouvoir le soulever via la navette 41.

Lorsque la vitesse est sélectionnée, la navette 41 est positionnée sous le pignon d'entrée Frₗ correspondant au rapport i sélectionné, qui est alors bloqué en rotation par un des cliquets 42, et engrène avec le pignon correspondant de sortie.

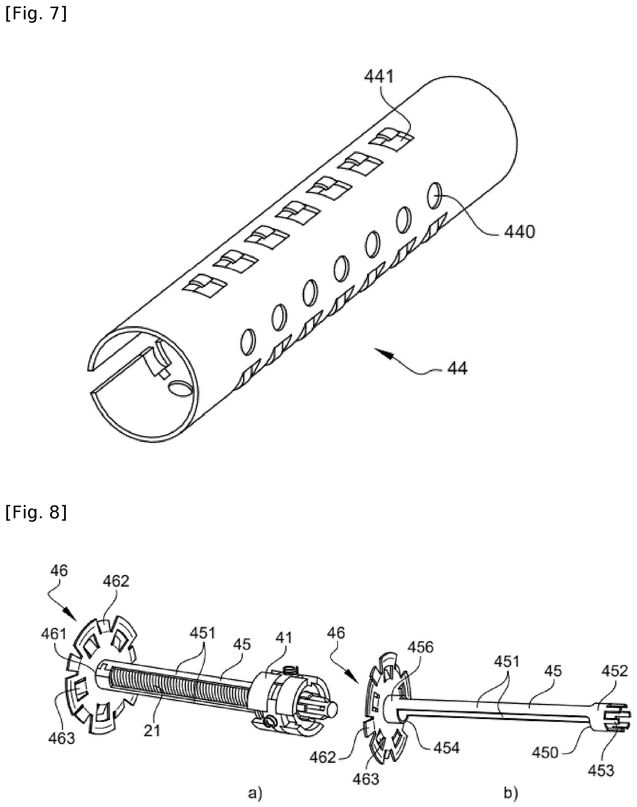

Selon un mode de réalisation de l'invention, le maintien des cliquets 42 est réalisée par une bague de maintien 44 illustré [Fig. 6] et [Fig. 7].

Selon un mode de réalisation de l'invention, la bague est en matière élastique. Selon un mode de réalisation de l'invention, la bague 44 est en acier ressort emboutie. Selon un autre mode de réalisation de l'invention, la bague 44 est en plastique. Cette bague de maintien 44 est disposée à l'intérieur de l'arbre de sélection 40. La bague 44 forme un cylindre plaqué à l'intérieur de l'arbre de sélection 40, contre la surface interne de l'arbre de sélection 40. Le maintien est ainsi réalisé par l'intérieur de l'arbre de sélection 40.

Selon un mode de réalisation de l'invention, la bague est ouverte dans le sens longitudinal. La longueur de la bague 44 est déterminée de façon à ce que l'ensemble des cliquets 42 soit maintenu.

Selon un mode de réalisation de l'invention, la bague de maintien 44 comporte des ouvertures 440 qui coopèrent avec les billes 43 placées sous les cliquets. La bague de maintien 44 permet ainsi de maintenir les billes 43 en place.

Selon un mode de réalisation de l'invention, la bague de maintien 44 comporte au moins deux languettes 441 formées à partir de la bague 44. Plus précisément, les languettes 441 sont formées par découpage, emboutissage ou pliage, ou tout autre procédé permettant d'obtenir une forme de languette, de la bague de maintien 44. Selon un mode de réalisation la bague de maintien 44 comportent autant de languettes 441 que de cliquets 42.

Chaque languette 441 est disposée sous un cliquet 4 au niveau de la partie 422 du cliquet 42 insérée dans le logement 420 formé dans l'arbre de sélection 40.

La bague de maintien 44 permet ainsi de maintenir le cliquet en position fermé. Pour cela, la bague de maintien 44 exerce, par le biais des languettes, sur chaque cliquet 42 une pression, ou force de plaquage, suffisante pour plaquer le cliquet 42 dans le logement 420 tout en lui permettant d'être soulevé par la navette 41. La force de plaquage est définie de façon à contrer l'effet centrifuge sur le cliquet 42.

C'est-à-dire que chaque languette 441 appuie sur l'extrémité 422 du cliquet qui est ainsi plaqué contre la face supérieur 423 du logement 420, l'autre extrémité 424 du cliquet est ainsi libre d'être soulevée par un effet pivot par la bille 43.

Selon un mode de réalisation de l 'invention, la bague de maintien 44 comporte au moins une série de sept languettes 441 disposées les unes à la suite des autres selon l'axe longitudinale X2 de l'arbre de sélection 40, sous chaque cliquet 42.

Selon un mode de réalisation de l'invention, le dispositif de changement de vitesse 20 comporte trois séries d'au moins sept languettes 441 disposées les unes à la suite des autres selon l'axe longitudinale X2 de l'arbre de sélection 40. Les séries étant disposées à 120 degrés l'une de l'autre autour de l'arbre de sélection 40.

Selon un mode de réalisation de l 'invention, la bague de maintien 44 comporte au moins une série de sept ouvertures 440 disposées les unes à la suite des autres selon l'axe longitudinale X2 de l'arbre de sélection 40, sous chaque bille 43.

Selon un mode de réalisation de l'invention, le dispositif de changement de vitesse 20 comporte trois séries d'au moins sept ouvertures 440 disposées les unes à la suite des autres selon l'axe longitudinale X2 de l'arbre de sélection 40. Les séries étant disposées à 120 degrés l'une de l'autre autour de l'arbre de sélection 40.

Selon un mode de réalisation de l'invention les séries de languettes 441 et d'ouverture 440 sont intercalées dans la direction radiale de la bague de maintien 44.

Lors de l'utilisation de l'engin, la navette 41 permet de sélectionner le rapport choisi qui va enclencher un pignon d'entrée Fri via un cliquet 42.

Le pignon d'entrée Fri engrène ensuite avec un pignon de sortie Fi.

Si l'engin 1 roule dans un rapport i, sans en changer, la vis sans fin 21 ne tourne pas.

Lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41 et permet ainsi le passage de rapport. Grâce à la liaison pivot ainsi réalisée le mouvement de rotation de la vis sans fin 21 est transformé en mouvement de translation de la navette 41.

Selon un mode de réalisation de l'invention, une butée limite à chaque extrémité le déplacement de la navette 41. Selon un autre mode de réalisation de l'invention, le déplacement de la navette est contrôlé par un capteur de position.

Selon un mode de réalisation non illustré, la navette 41 est apte à prendre une position dite position neutre P0 pour laquelle aucun rapport de vitesse n'est engagé.

Dans le cadre de l'invention, la vis 21 sans fin est positionnée dans un tube 45 de guidage visible [Fig.4]. Le tube de guidage sert à guider la navette 41 le long de la vis 21 sans fin.

Selon un mode de réalisation de l'invention, le tube 45 de guidage est formé par deux lames 451, également appelés rails. Les deux lames 451 sont disposée longitudinalement par rapport à la vis 21 sans fin et de part et d'autre. Selon un mode de réalisation de l'invention, les deux lames sont disposées entre à 45 degrés et 180 degrés par rapport à la vis 21 sans fin dans la sens de sa longueur.

Selon un mode de réalisation de l'invention, la longueur du tube 45 de guidage est déterminée de façon à ce que la vis 21 sans fin y soit totalement inséré.

Selon un mode de réalisation de l'invention, la longueur du tube 45 de guidage est identique à celle de la vis 21 sans fin. Selon un mode de réalisation de l'invention, une première extrémité 450 du tube 45 de guidage à une forme de bague 452 se terminant par un découpage en forme de créneau 453.

Selon un mode de réalisation de l'invention, ces créneaux 453 coopèrent avec ceux d'au moins une rondelle 455 anti-rotation fixée à l'arbre de sélection 40. Cette rondelle 455 est fixe en rotation et est configurée pour que la vis 21 tourne sans l'entrainer.

Selon un mode de réalisation de l'invention, la deuxième 454 extrémité du tube 45 de guidage est formée par une deuxième 456 bague insérée dans une ouverture 461 formée dans un élément 46 de blocage en rotation.

Selon un mode de réalisation de l'invention, la deuxième bague 454 est logée dans un élément 47 anti-rotation, du type par exemple rondelle.

Selon un mode de réalisation de l'invention, l'élément 46 de blocage en rotation est formé par une rondelle. Selon un mode de réalisation de l'invention, la rondelle comporte en son centre une ouverture 461 dans laquelle sont insérées les extrémités du tube 45 de guidage et de la vis 21 sans fin. L'élément 46 de blocage en rotation est disposé radialement par rapport à la vis 21 sans fin, c'est-à-dire perpendiculairement aux axes Xv et Xp de l'engin 1.

Selon un mode de réalisation de l'invention, l'élément 46 de blocage en rotation à un diamètre supérieur à celui de l'arbre 40 de sélection pour assurer la stabilité du blocage en rotation. Selon un mode de réalisation de l'invention, l'élément 46 de blocage en rotation comporte au moins un découpage externe 462 et/ou au moins un découpage interne 463

Selon un mode de réalisation de l'invention, le découpage externe 462 est formé au niveau du bord externe de l'élément 46 de blocage en rotation. Le découpage est réalisé de façon à former une languette 462. La languette 462 est décalée par rapport au plan radial de l'élément 46 de blocage vers l'extérieur, c'est-à-dire dans une direction parallèle à l'axe de la vis 21 sans fin et opposée.

Selon un mode de réalisation de l'invention, le découpage interne 463 est entre le bord externe de l'élément 46 de blocage en rotation et son ouverture 461 centrale. Le découpage est réalisé de façon à former une languette 463. La languette 463 est décalée par rapport au plan radial de l'élément 46 de blocage vers l'extérieur, c'est-à-dire dans la même direction que celle du décalage de la languette 462 externe.

Selon un mode de réalisation de l'invention, l'élément 46 de blocage en rotation comporte au moins deux languettes 462 externes et au moins deux languettes 463 internes. Les languettes 462 internes et externes 463 sont disposées de façon à être intercalées.

Selon un mode de réalisation de l'invention, l'élément 46 de blocage en rotation comporte cinq languettes 462 externes et cinq languettes 463 internes. Les languettes 462 internes et externes 463 sont disposées de façon à être intercalées visible [Fig. 8].

Cet ensemble de languettes assure une certaine élasticité à l'élément 46 de blocage en rotation qui permet de d'éviter que les vibrations par exemple, ne casse l'ensemble.

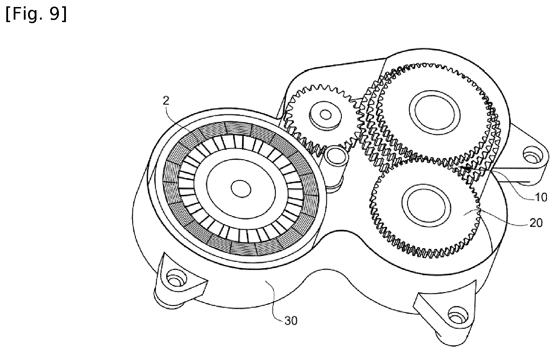

Selon un mode de réalisation de l'invention, l'élément 46 de blocage en rotation est inséré en pression dans un logement 317 adapté du couvercle du boitier 30. L'élément 46 de blocage en rotation est plaqué dans le logement grace à l'élasticité des languettes. La taille du logement est définie de façon à permettre une insertion en force de l'élément 46 de blocage en rotation. Ainsi l'élément 46 de blocage en rotation permet de bloquer la rotation du tube 45 de guidage par frottement et pression. L'élément 46 de blocage en rotation permet également de centrer le tube 45 de guidage et ainsi l'ensemble des autres éléments. La [Fig. 9] illustre plus en détail le boîtier 30 de l'engin de mobilité 1de la figure 1 comportant l'ensemble de transmission selon l'invention.

Selon un mode de réalisation de l'invention, le boitier comporte un premier logement 311 agencé pour loger les engrenages du dispositif de changement de vitesse 20 et au moins deux logements 312, 313 distincts l'un de l'autre autres agencés pour loger respectivement le moteur électrique et l'actionneur de changement de vitesse.

Selon un mode de réalisation de l'invention, le boitier 30 est ouvert sur une face.

Selon un mode de réalisation de l'invention, cette face est refermée par un couvercle 316.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif de changement de vitesse (20) pour engin de mobilité (1) comportant un arbre de sélection (40) dans lequel sont disposées une navette (41), une vis sans fin (21) et un tube (45) de guidage dans lequel est positionnée la vis (21) sans fin, **caractérisé en ce qu'**une première extrémité (450) du tube (45) de guidage a une forme de bague (452) se terminant par un découpage en forme de créneau (453), les créneaux (453) coopérants avec ceux d'au moins une rondelle (455) anti-rotation fixée à l'arbre de sélection (40).

2. Dispositif de changement de vitesse (20) selon la revendication 1, dans lequel une des extrémités (450,454) du tube (45) est insérée dans un élément (46) de blocage en rotation permettant de bloquer la rotation du tube de guidage (45).

3. Dispositif de changement de vitesse (20) selon une des revendications 1 ou 2, dans lequel le tube (45) de guidage est formé par deux lames (451) disposée longitudinalement par rapport à la vis (21) sans fin et de part et d'autre.

4. Dispositif de changement de vitesse (20) selon la revendication 3, dans lequel les deux lames (451) sont disposées entre 45 degrés et 180 degrés par rapport à la vis (21) sans fin dans la sens de sa longueur.

5. Dispositif de changement de vitesse (20) selon une des revendications 1 à 4, dans lequel, la longueur du tube (45) de guidage est déterminée de façon à ce que la vis (21) sans fin y soit totalement inséré.

6. Dispositif de changement de vitesse (20) selon une des revendications 1 à 5, dans lequel, la longueur du tube (45) de guidage est identique à celle de la vis (21) sans fin.

7. Dispositif de changement de vitesse (20) selon la revendication 2, dans lequel la deuxième (454) extrémité du tube (45) de guidage est formée par une deuxième (456) bague insérée dans une ouverture (461) formée dans l' élément (46) de blocage en rotation.

8. Engin de mobilité (1), notamment engin de mobilité à assistance électrique, comportant un dispositif de changement de vitesse (20) selon l'une quelconque des revendications précédentes.

## Patentansprüche

1. Gangschaltvorrichtung (20) für ein Fortbewegungsmittel (1), mit einer Schaltwelle (40), in der ein Schaltkolben (41), eine Schnecke (21) und ein Führungsrohr (45), in dem die Schnecke (21) angeordnet ist, **dadurch gekennzeichnet, dass** ein erstes Ende (450) des Führungsrohrs (45) die Form eines Rings (452) aufweist, der in einem zahnartigen Ausschnitt (453) endet, wobei die Zacken (453) mit denen mindestens einer an der Schaltwelle (40) befestigten Verdrehsicherungsscheibe (455) zusammenwirken.

2. Schaltvorrichtung (20) nach Anspruch 1, wobei eines der Enden (450, 454) des Führungsrohrs (45) in ein Drehsperrelement (46) eingeführt ist, das es ermöglicht, die Drehung des Führungsrohrs (45) zu sperren.

3. Gangschaltvorrichtung (20) nach einem der Ansprüche 1 oder 2, wobei das Führungsrohr (45) aus zwei Lamellen (451) gebildet ist, die in Längsrichtung zur Endlosschraube (21) und beidseitig davon angeordnet sind.

4. Gangwechselvorrichtung (20) nach Anspruch 3, wobei die beiden Lamellen (451) in Längsrichtung der Endlosschnecke (21) in einem Winkel zwischen 45 Grad und 180 Grad zu dieser angeordnet sind.

5. Gangschaltvorrichtung (20) nach einem der Ansprüche 1 bis 4, wobei die Länge des Führungsrohrs (45) so bemessen ist, dass die Endlosschnecke (21) vollständig darin eingeführt ist. 25

6. Gangschaltvorrichtung (20) nach einem der Ansprüche 1 bis 5, wobei die Länge des Führungsrohrs (45) mit der Länge der Schnecke (21) identisch ist.

7. Gangschaltvorrichtung (20) nach einem der vorstehenden Ansprüche, wobei das zweite (454) Ende des Führungsrohrs (45) durch einen zweiten (456) Ring gebildet ist, der in eine in dem Drehsperrelement (46) ausgebildete Öffnung (461) eingesetzt ist.

8. Fortbewegungsmittel (1), insbesondere ein elektrisch unterstütztes Fortbewegungsmittel, mit einer Gangschaltvorrichtung (20) gemäß einem der vorstehenden Ansprüche.

## Claims

1. A gearshift device (20) for a mobility vehicle (1) comprising a selector shaft (40) in which are disposed a shuttle (41), a worm gear (21), and a guide tube (45) in which the worm gear (21) is positioned, **characterized in that** a first end (450) of the guide tube (45) is shaped like a ring (452) terminating in a notched cutout (453), the notches (453) engaging with those of at least one anti-rotation washer (455) secured to the selector shaft (40).

2. A gearshift device (20) according to claim 1, in which one of the ends (450, 454) of the tube (45) is inserted into a rotation-locking element (46) that locks the rotation of the guide tube (45).

3. A gearshift device (20) according to one of claims 1 or 2, wherein the guide tube (45) is formed by two blades (451) arranged longitudinally with respect to the worm screw (21) and on either side thereof.

4. A gearshift device (20) according to claim 3, wherein the two blades (451) are arranged at an angle of between 45 degrees and 180 degrees relative to the worm screw (21) in the direction of its length.

5. A speed-changing device (20) according to any one of claims 1 through 4, wherein the length of the guide tube (45) is determined such that the worm screw (21) is fully inserted therein. 25

6. A gearshift device (20) according to any one of claims 1 through 5, wherein the length of the guide tube (45) is identical to that of the worm screw (21).

7. A gearshift device (20) according to any of the preceding claims, wherein the second (454) end of the guide tube (45) is formed by a second (456) ring inserted into an opening (461) formed in the rotation-locking element (46).

8. A mobility device (1), in particular an electrically assisted mobility device, comprising a gearshift device (20) according to any one of the preceding claims.
